**Europäisches Patentamt**

**European Patent Office**

**Office européen des brevets**

(11) Veröffentlichungsnummer: **0 075 867**

**A1**

(12) # EUROPÄISCHE PATENTANMELDUNG

(21) Anmeldenummer: 82108805.1

(22) Anmeldetag: 23.09.82

(51) Int. Cl.³: **G 01 N 31/08**

(30) Priorität: 25.09.81 DE 8128525 U

(43) Veröffentlichungstag der Anmeldung:
06.04.83 Patentblatt 83/14

(84) Benannte Vertragsstaaten:
CH FR GB LI

(71) Anmelder: C A M A G Chemie-Erzeugnisse und
Adsorptionstechnik AG
Sonnenmattstrasse 11
D-4132 Muttenz(CH)

(72) Erfinder: Bär, Jürg
Zegliweg 12
CH-4456 Tenniken(CH)

(72) Erfinder: Schmutz, Hans Rudolf
Kastellstrasse 3
CH-4303 Kaiseraugst(CH)

(74) Vertreter: Leiser, Gottfried, Dipl.-Ing. et al,
Patentanwälte Prinz, Bunke & Partner Ernsberger
Strasse 19
D-8000 München 60(DE)

(54) **Vorrichtung und Verfahren zur automatischen Probenaufgabe bei der Dünnschicht-Chromatographie.**

(57) Eine Vorrichtung zur automatischen Probenaufgabe bei der Dünnschicht-Chromatographie besteht aus einem Unterteil (1) und einem oberhalb des Unterteils angeordneten Auftragekopf (2). Das Unterteil trägt zwei Chromatographieplatten (7, 8) gleicher Oberflächenbeschaffenheit und eine Reihe von Probengefäßen (6, 6', 6", etc.). Der Auftragekopf (2) führt eine Kapillare (3), die mit einer Saug- und Druckspritze (4) verbunden ist. Der Auftragekopf (2) ist gegenüber dem Unterteil (1) seitlich verschiebbar, so daß er über jede gewünschte Stelle entlang den beiden Chromatographieplatten (7, 8) und über jedes Probengefäß (6, 6', 6") gebracht werden kann. Ferner ist der Auftragekopf (2) heb- und senkbar und um eine vertikale Achse schwenkbar, so daß die Kapillare (3) auf jede Chromatographieplatte (7, 8) und in jedes Probengefäß (6, 6', 6") abgesenkt werden kann.

Das Verfahren zur automatischen Probenaufgabe mit dieser Vorrichtung zeichnet sich dadurch aus, daß mit Hilfe der Saug- und Druckspritze (4) mehr Probenflüssigkeit in die Kapillare (3) aufgezogen wird, als für die Probenaufgabe benötigt wird, und daß zum Zweck der Reinigung und genauen Dosierung zunächst eine kleine Menge der Probenflüssigkeit auf die eine Chromatographieplatte (8) abgegeben wird, bevor der eigentliche Probenauftrag auf die andere Chromatographieplatte (7) erfolgt. Vorzugsweise wird vor dem Aufziehen der Probenflüssigkeit eine andere Flüssigkeit (Spül- oder Verdrängungsflüssigkeit) in die Kapillare (3) eingebracht.

./...

FIG.1

PRINZ, BUNKE & PARTNER

Patentanwälte · European Patent Attorneys

München          Stuttgart          **0075867**

23. September 1982

C A M A G

Chemie-Erzeugnisse und
Adsorptionstechnik AG
Sonnenmattstraße 11

4132 Muttenz / Schweiz

Unser Zeichen: C 3317b

## Vorrichtung und Verfahren zur automatischen Probenaufgabe bei der Dünnschicht-Chromatographie

Die mit Sorptions-Trennschichtmaterial von geringer Schichtstärke arbeitenden Chromatographie-Verfahren dienen der qualitativen und auch der quantitativen Analysierung von Materialproben. Je besser die Trennfähigkeit des Trennschichtmaterials ist, umso mehr kommt es auf einen in der Menge richtig dosierten Probenauftrag auf die Schicht an, wobei die Startfleckzone eine möglichst geringe Ausdehnung haben soll und die Schicht beim Auftrag der Probe nicht beschädigt werden darf.

Die Erfindung hat die Aufgabe, eine Vorrichtung und ein Verfahren zu schaffen, die diesen Forderungen gerecht werden und in der Lage sind, den Probenauftrag auf die Schicht in seinem gesamten Ablauf von der Entnahme der Probe aus einem Gefäß bis zur Aufbringung der Probe auf die Sorptions-Trennschicht in einem kleinen Startfleck ohne Beschädigung der Trennschicht automatisch durchzuführen.

Zur Lösung der gestellten Aufgabe hat die Vorrichtung gemäß der Erfindung einen die elektromechanischen Antriebsmittel enthaltenden Unterteil mit Auflageflächen für die der Analyse dienende Chromatographieplatte sowie einer weiteren Platte von gleicher Oberflächenbeschaffenheit, eine Halterung für Probengefäße und einen über die beiden Platten sowie über die Probengefäße bewegbaren heb- und senkbaren Auftragekopf, der die vertikal bewegbare Auftragekapillare führt, welche mit einer Saug- und Druckspritze für das Probenmaterial verbunden ist.

Zweckmäßig enthält die Saug- und Druckspritze oder Kapillare auch eine andere Flüssigkeit als das Probenmaterial, wobei letzteres zweckmäßig nur in den Mündungsteil der Kapillare aufgenommen wird. Es ist vorteilhaft, wenn der Antrieb des Auftragekopfes für seine Bewegung über die Platten aus einem Schrittmotor besteht und ein pneumatischer Antrieb für die Hub- und Senkbewegungen des Auftragekopfes und der Auftragskapillare vorgesehen ist.

Zweckmäßig ist ein am Auftragekopf befestigter und mit der Kapillare pneumatisch lösbar verbundener Stützfuß oder Anschlag vorhanden, der die Abwärtsbewegung der Kapillare begrenzt. Die Probengefäße haben zweckmäßig einen Verschluß, der von einem auf der Drehachse des Auftragekopfes vertikal gleitenden Hebel mit Stichkanüle durchstoßbar ist, bevor die die Probenflüssigkeit entnehmende Kapillare in das Gefäß eingeführt wird.

Weitere Merkmale der Erfindung, insbesondere auch betreffend das zweckmäßig angewendete Verfahren, ergeben sich aus der nachfolgenden Beschreibung und der Zeichnung, welche ein Ausführungsbeispiel der Vorrichtung darstellt.

In der Zeichnung sind:

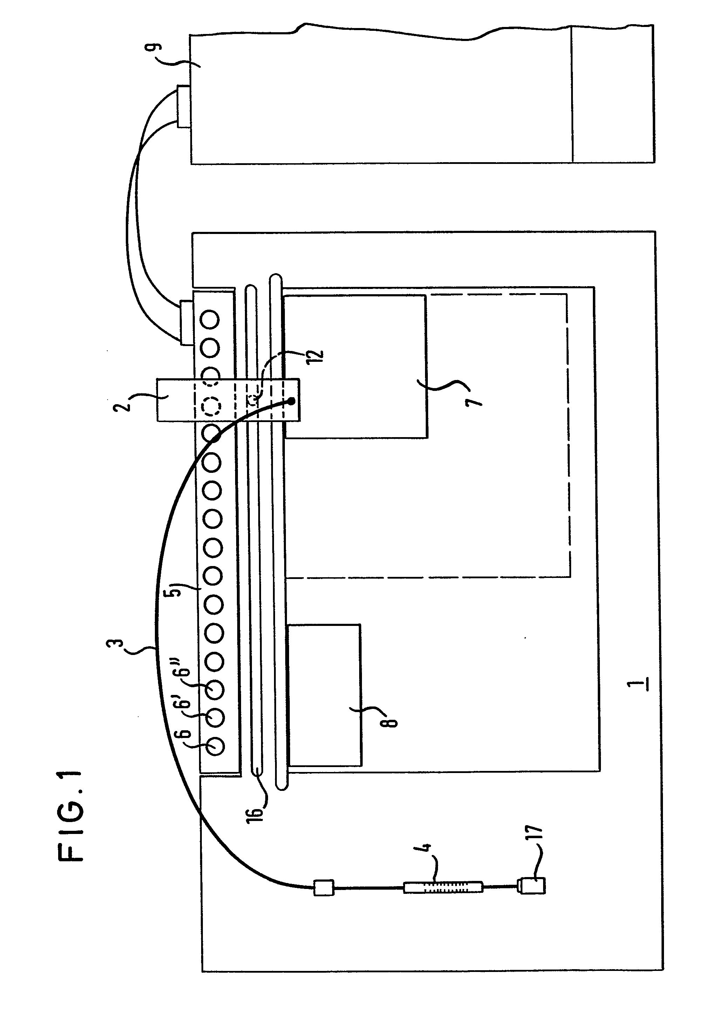

Fig. 1   eine Draufsicht auf die Vorrichtung,

Fig. 2   eine Seitenansicht der Vorrichtung in der Stellung der Probenentnahme aus einem Probengefäß und

Fig. 3   eine Seitenansicht der Vorrichtung in der Stellung des Probenauftrages.

Die die Erfindung bildende Vorrichtung besteht im wesentlichen aus einem Unterteil 1 und aus einem oberhalb des Unterteils 1 angeordneten und gegenüber dem Unterteil 1 bewegbaren Auftragekopf 2. Das Unterteil 1 trägt die der Analyse dienende Chromatographieplatte 7 sowie eine weitere Platte 8 von gleicher Oberflächenbeschaffenheit. Der Auftragekopf 2 ist an einem vertikalen Träger 12 angebracht, der vom Unterteil 1 durch einen linearen Schlitz 16 nach oben ragt. Parallel zu dem Schlitz 16 ist am Unterteil 1 eine Halterung 5 für Probengefäße 6, 6', 6" etc. angebracht. Mittels des Trägers 12 kann der Auftragekopf 2 entlang dem Schlitz 16 seitlich verschoben und dadurch in jede gewünschte Stellung über den Platten 7 und 8 sowie über jedes Probengefäß 6, 6', 6" etc. gebracht werden. Der Auftragekopf 2 ist außerdem relativ zu den Platten 7 und 8 bzw. zu den Probegefäßen heb- und senkbar, und er kann um die vertikale Achse des Trägers 12 gedreht werden.

Der Auftragekopf 2 dient als Führung für eine flexible Auftragekapillare 3, die mit einer Saug- und Druckspritze 4 für das Probenmaterial verbunden ist. Die Saug- und Druckspritze 4 wird von einem Motor 17 angetrieben, der vorzugsweise als Schrittmotor ausgebildet ist. Der Auftragekopf 2 enthält einen Pneumatik-Zylinder 13, durch den die Kapillare 3 vertikal verschiebbar hindurchgeführt ist. Innerhalb des Zylinders 13 ist ein ringförmiger Kolben 15 an der Kapillare 3 befestigt. Das obere Ende des Zylinders 13 ist durch einen vertikal verstellbaren Anschlag 14 verschlossen, der eine Mittelbohrung aufweist, durch den die Kapillare 3 hindurchgeht. An das untere Ende des Zylinders 13 schließt sich gleichachsig zu diesem ein am Auftragekopf 2 befestigter rohrförmiger Stützfuß 10 an. Der untere Endabschnitt der Kapillare 3 ist durch den rohrförmigen Stützfuß 10 hindurchgeführt.

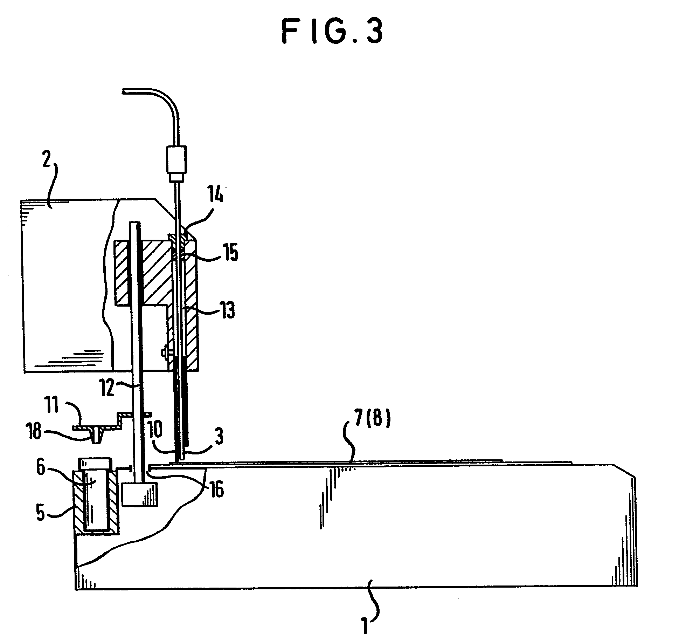

Wenn in den unteren Teil des Zylinders 13 ein Druckgas, beispielsweise Stickstoff, eingeblasen wird, bewegt sich der Kolben 15 mit der Kapillare 3 gegenüber dem Auftragekopf 2 nach oben, bis er am Anschlag 14 anliegt (Fig. 3). In dieser Stellung ist die Kapillare 3 so justiert, daß ihr unteres Ende um eine sehr kleine Strecke (ca. 0,01 bis 0,03 mm) oberhalb des unteren Endes des rohrförmigen Stützfußes 10 liegt. Wenn der Stützfuß 10 durch vertikale Verstellung des Auftragekopfes 2 auf die Chromatographieplatte 7 abgesenkt wird, wird durch diese Ausbildung erreicht, daß die Mündung der Kapillare 3 in einem gewünschten sehr kleinen Abstand über der Oberfläche der Chromatographieschicht gehalten wird, weil sonst durch die Saugkraft der Schicht eine unkontrollierte Menge Probenflüssigkeit aus der Kapillare gezogen werden könnte.

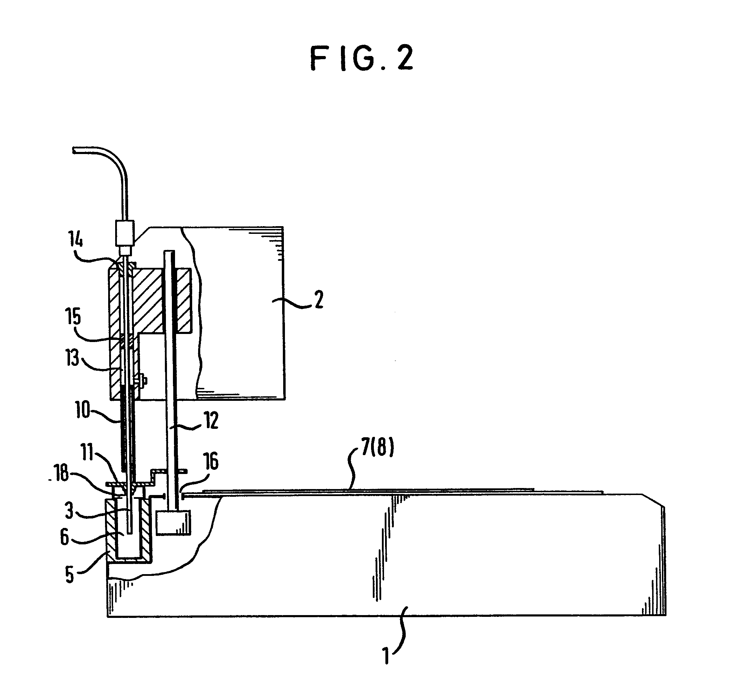

Wird das Druckgas abgelassen, so kann sich der Kolben 15 mit der Kapillare 3 unter dem Eigengewicht nach unten bewegen, so daß der untere Endabschnitt der Kapillare 3 aus dem rohrförmigen Stützfuß 10 herausragt und beispielsweise in ein Probengefäß 6 abgesenkt werden kann, wie in Fig. 2 dargestellt ist.

Die Probengefäße können, insbesondere wenn sie leicht flüchtige Lösungsmittel enthalten, mit einem Septum in Form einer dünnen Verschlußfolie versehen sein. Um das Septum unmittelbar vor dem Eintritt der Kapillare 3 in ein Probengefäß zu durchstoßen, ist eine Stichkanüle 18 vorgesehen, die von einem entlang dem Träger 12 vertikal gleitbaren Hebel 11 getragen wird. Der Hebel 11 wird durch eine (nicht dargestellte) Feder in die in Fig. 3 gezeigte obere Stellung gedrückt. In dieser oberen Stellung befindet sich die Stichkanüle 18 oberhalb der Reihe der Probengefäße 6, 6', 6" etc., und der Hebel 11 wird von dem Träger 12 mitgenommen, wenn der Auftragekopf 2 entlang dem Schlitz 16 seitlich verschoben wird.

Die flexible Auftragekapillare 3 besteht vorzugsweise aus Quarz (fused silica) oder auch aus einem anderen geeigneten Material. So kann beispielsweise im eigentlichen Auftragebereich eine Metallkapillare vorhanden sein, die über eine Kunststoffkapillare mit der Spritze 4 in Verbindung steht.

Bei der Benutzung der Vorrichtung gemäß der Erfindung ergibt sich folgender Arbeitsablauf:

In der Ausgangsstellung ist der Auftragekopf 2 angehoben, so daß das untere Ende des rohrförmigen Stützfußes 10 oberhalb der Ebene des Hebels 11 liegt, und Druckgas ist in den unteren Teil des Zylinders 13 eingeführt, so daß der Kolben 15 am Anschlag 14 anliegt und die Mündung der Kapillare 3 in den rohrförmigen Stützfuß 10 zurückgezogen ist. Der Auftragekopf wird um die vertikale Achse des Trägers 12 in eine Stellung gedreht, in welcher sich der Stützfuß 10 über dem Hebel 11 und der Halterung 5 befindet. Dann wird der Auftragekopf 2 entlang dem Schlitz 16 seitlich verschoben, bis sich die Kapillare über einem ausgewählten Probengefäß, beispielsweise über dem Probengefäß 6', befindet. Das erste gewählte Probengefäß kann eine andere Flüssigkeit als das Probenmaterial, beispielsweise eine Spül- oder Verdrängungsflüssigkeit,enthalten. Der Auftragekopf 2 wird dann nach unten bewegt, so daß der Stützfuß 10 den Hebel 11 erfaßt und diesen gegen die Federkraft nach unten mitnimmt, bis er auf der Oberseite des Probengefäßes aufliegt. Im letzten Teil dieser Abwärtsbewegung des Hebels 11 durchstößt die Stichkanüle 18 das das Probengefäß bedeckende Septum. Unmittelbar danach wird das Druckgas aus dem Zylinder 13 abgelassen, so daß die Kapillare 3 durch die Stichkanüle 18 in das Probengefäß eindringt. In dieser Stellung, die in Fig. 2 dargestellt ist, wird durch Betätigung der Spritze 4 eine gewisse Menge der im Probengefäß befindlichen Flüssigkeit in die Kapillare 3 eingesaugt. Dann wird die Kapillare 3 durch Einlassen von Druckgas in den Zylinder 13 aus dem Probengefäß herausgezogen, und der Auftragekopf 2 wird angehoben. Der Auftragekopf 2 bewegt sich dann mit der Kapillare 3 über ein zweites durch eine Steuerung adressiertes Probengefäß, beispielsweise das Probengefäß 6", in welches die Kapillare in der zuvor beschriebenen Weise abgesenkt wird. Mittels der Spritze 4 wird aus diesem Gefäß eine etwas größere Menge Probenflüssigkeit entnommen, als quantitativ dosiert werden soll. Nachdem der Auftragekopf 2 erneut angehoben worden ist, wird er um 180° um die Achse des Trägers 12 geschwenkt und über eine adressierte Stelle der Platte 8 gefahren. Dort wird der Stützfuß 10 durch Abwärtsbewegung des Auftragekopfes 2 auf die Schicht abgesenkt. Wie zuvor erläutert wurde, befindet sich in dieser Stellung (Fig. 3) die Mündung der Kapillare 3 in einem bestimmten, sehr kleinen Abstand (z.B. 0,01 bis 0,03 mm) über der Oberfläche der Chromatographieschicht. Durch Betätigung der Spritze 4 wird eine kleine Menge Probenflüssigkeit aus der Kapillare 3 ausgestoßen. Dies hat den Zweck, das Kapillarenende so abzustreifen und damit zu reinigen, daß bei dem später erfolgenden Absenken der Kapillare auf die eigentliche der Analyse dienende Chromatographieschicht der Platte 7 keine Probenflüssigkeit ungewollt abgegeben wird. Die Chromatographieplatte 8 dient nur diesem Reinigungszweck und wird später weggeworfen.

Nun wird der Auftragekopf 2 mit der Kapillare 3 wieder angehoben und seitlich bis zu einer adressierten Stelle der eigentlichen Chromatographieplatte 7 verschoben. Durch Abwärtsbewegung des Auftragekopfes 2 wird der Stützfuß 10 auf die Oberfläche der Platte 7 abgesenkt (Fig. 3). Die Mündung der Kapillare 3 befindet sich dann wieder in dem bestimmten, sehr kleinen Abstand über der Oberfläche der Chromatographieschicht. Dann wird durch Betätigung der Spritze 4 die gewünschte Menge der Probenflüssigkeit abgegeben. Wie zuvor erwähnt, erfolgt die Betätigung der Spritze 4 vorzugsweise durch einen Schrittmotor. Dies ergibt den Vorteil, daß in Intervallen wählbarer Dauer kleine Teilmengen der Probenflüssigkeit abgegeben werden können. Durch die Abgabe kleiner Teilmengen der Probenflüssigkeit erreicht man den gewünschten kleinen Durchmesser der Auftragezone.

Durch Aufwärtsbewegung des Auftragekopfes 2 wird nun die Kapillare 3 von der Platte 7 abgehoben, worauf der Auftragekopf um 180° gedreht und seitlich verschoben wird, um die Kapillare 3 über ein leeres Gefäß, beispielsweise das Gefäß 6, zu fahren. Dort wird der Rest der zuviel aufgezogenen Probenflüssigkeit sowie ein kleiner Teil der anderen Flüssigkeit (Spül- oder Verdrängungsflüssigkeit) ausgestoßen. Schließlich wird die Kapillare durch den Auftragekopf 2 erneut über das zuerst gewählte Probengefäß, also beispielsweise das Probengefäß 6' gefahren, das die Spül- oder Verdrängungsflüssigkeit enthält, aus dem die ursprüngliche Menge wieder aufgefüllt wird. Damit beginnt ein neuer Arbeitsablauf der Vorrichtung für den nächsten Probenauftrag.

Bei einer anderen Betriebsweise der Vorrichtung kann von der Kapillare 3 bzw. der Spritze 4 aus einem Probengefäß soviel Probenflüssigkeit aufgezogen werden, daß nacheinander zwei oder auch mehr Probeauftragungen an verschiedenen Stellen der Chromatographieschicht 7 erfolgen können. Dies kommt beispielsweise für die Doppelbestimmung der Unbekannten oder auch für die Dosierung unterschiedlicher Mengen der Kalibrierflüssigkeit in Betracht. Dabei wird der Reinigungsschritt zwischen den Einzelauftragungen eingespart.

Nach einer vorteilhaften Ausführungsform der Vorrichtung nach der Erfindung erfolgt die seitliche Bewegung des Auftragekopfes 2 elektromechanisch mittels eines Schrittmotorantriebs, während die Schwenkbewegungen des Auftragekopfes sowie das Heben und Senken des Auftragekopfes der Kapillare durch pneumatischen Antrieb erfolgen. Die elektromechanischen Antriebsmittel sowie die die pneumatischen Antriebe steuernden Magnetventile sind im Unterteil 1 untergebracht. Der pneumatische Antrieb der Kapillare bietet die Möglichkeit, eine kleine Menge des zum Antrieb benutzten Gases, wie Stickstoff, abzuzweigen, durch den Zwischenraum zwischen der Kapillare 3 und dem rohrförmigen Stützfuß 10 nach unten zu leiten und zum Anblasen und Abtrocknen der Auftragszone zu verwenden, um den Arbeitsvorgang zu beschleunigen und die Startflecken klein zu halten. Wie in Fig. 3 gezeigt ist, ist das untere Ende des rohrförmigen Stützfußes 10 teilweise ausgeschnitten, um den Austritt des abgezweigten Gases zu erlauben.

Alle Antriebe der Vorrichtung für die Betätigung der beweglichen Organe können nach einem vorbestimmten Programm durch eine geeignete mikroelektronische Steuereinheit 9 gesteuert werden. Die Steuereinheit 9 kann ein entsprechend programmierter Mikroprozessor, ein Tischcomputer oder ein anderes geeignetes Gerät sein.

C A M A G
Chemie-Erzeugnisse und
Adsorptionstechnik AG
Sonnenmattstraße 11

4132 Muttenz / Schweiz

23. September 1982

Unser Zeichen: C 3317b

P a t e n t a n s p r ü c h e

1. Vorrichtung zur automatischen Probenaufgabe bei Dünnschicht-Chromatographie, gekennzeichnet durch einen die elektromechanischen Antriebsmittel enthaltenden Unterteil (1) mit Auflageflächen für die der Analyse dienende Chromatographieplatte (7) sowie einer weiteren Platte (8) von gleicher Oberflächenbeschaffenheit, eine Halterung (5) für Probengefäße (6, 6', 6" etc) und einen über die beiden Platten (7, 8) sowie über die Probengefäße bewegbaren heb- und senkbaren Auftragekopf (2), der die vertikal bewegbare Auftragekapillare (3) führt, welche mit einer Saug- und Druckspritze (4) für das Probenmaterial verbunden ist.

2. Vorrichtung nach Anspruch 1, dadurch gekennzeichnet, daß die Saug- und Druckspritze (4) sowie die Kapillare (3) auch eine andere Flüssigkeit als das Probenmaterial enthält.

3. Vorrichtung nach Anspruch 1 oder 2, dadurch gekennzeichnet, daß die Kapillare (3) relativ zum Auftragekopf (2) vertikal verschiebbar und in einer vorgegebenen Stellung festlegbar ist, und daß eine Einrichtung (10) vorgesehen ist, die die Abwärtsbewegung des Auftragekopfes (2) mit der in der vorgegebenen Stellung festgelegten Kapillare (3) begrenzt.

4. Vorrichtung nach Anspruch 3, gekennzeichnet durch einen pneumatischen Antrieb (13, 15) für die vertikale Verschiebung und Festlegung der Kapillare (3).

5. Vorrichtung nach Anspruch 3 oder 4, dadurch gekennzeichnet, daß die Begrenzungseinrichtung ein am Auftragekopf (2) befestigter Stützfuß (10) ist.

6. Vorrichtung nach Anspruch 5, dadurch gekennzeichnet, daß der Stützfuß (10) rohrförmig ist und die Kapillare (3) umgibt.

7. Vorrichtung nach einem der Ansprüche 1 bis 6, dadurch gekennzeichnet, daß der Antrieb der Saug- und Druckspritze (4) aus einem Schrittmotor (17) besteht, der in Intervallen die Abgabe kleiner Mengen des Probenmaterials bewirkt.

8. Vorrichtung nach einem der Ansprüche 1 bis 7, gekennzeichnet durch einen elektromechanischen Antrieb des Auftragekopfes (2) zur Bewegung desselben über die Chromatographieplatten (7, 8) und durch einen pneumatischen Antrieb für die Hub- und Senkbewegungen des Auftragekopfes (2).

9. Vorrichtung nach Anspruch 8, dadurch gekennzeichnet, daß der elektromechanische Antrieb des Auftragekopfes (2) einen Schrittmotor aufweist.

10. Vorrichtung nach einem der Ansprüche 1 bis 9, dadurch gekennzeichnet, daß die Probengefäße (6, 6', 6" etc.) einen Verschluß haben und daß ein relativ zum Auftragekopf (2) vertikal gleitbarer Hebel (11) vorgesehen ist, der eine Stichkanüle (11) trägt, mit welcher der Verschluß durchstoßbar ist, wenn der Auftragekopf auf ein Probengefäß abgesenkt wird, bevor die die Probenflüssigkeit entnehmende Kapillare (3) in das Probengefäß eingeführt wird.

11. Vorrichtung nach einem der Ansprüche 1 bis 10, gekennzeichnet durch eine elektronische Steuereinheit (9) zur Steuerung des Betriebs der Vorrichtung.

12. Vorrichtung nach Anspruch 11, dadurch gekennzeichnet, daß die elektronische Steuereinheit ein entsprechend programmierter Mikroprozessor oder ein Tischcomputer ist.

13. Vorrichtung nach einem der Ansprüche 1 bis 12, dadurch gekennzeichnet, daß die Auftragekapillare (3) aus Quarz (fused silica) besteht.

14. Verfahren zum automatischen Auftragen von Materialproben auf Sorptions-Trennschichten von geringer Schichtstärke zum Zwecke der Chromatographie unter Verwendung einer Vorrichtung nach einem der vorhergehenden Ansprüche, dadurch gekennzeichnet, daß die Kapillare des Auftragekopfes über ein Probengefäß gefahren wird, das eine andere Flüssigkeit als das Probenmaterial, beispielsweise eine Verdrängungsflüssigkeit, enthält, daß nach Absenken der Kapillare in dieses Gefäß eine gewisse Menge dieser anderen Flüssigkeit in die Kapillare eingesaugt wird, worauf die Kapillare durch Anheben des Auftragekopfes wieder aus dem Gefäß herausgezogen wird, daß die Kapillare hierauf mittels des Auftragekopfes über ein durch eine Steuerung adressiertes Probengefäß gefahren und in dieses abgesenkt wird, daß von der Kapillare aus diesem Gefäß eine etwas größere Menge Probenflüssigkeit entnommen wird, als quantitativ dosiert werden soll, daß die Kapillare dann mit dem Auftragekopf angehoben und zunächst über eine von der Chromatographieschicht unabhängige Schicht von gleicher Oberflächenbeschaffenheit abgesenkt wird, wo die Kapillare eine kleine Menge Probenflüssigkeit abgibt, woraufhin die Kapillare erneut angehoben und auf die eigentliche, der Analyse dienende Sorptions-Trennschicht abgesenkt wird, in welcher Stellung dann an die Trennschicht eine dosierte Probenmenge abgegeben wird.

15. Verfahren nach Anspruch 14, dadurch gekennzeichnet, daß aus der Kapillare mit Hilfe eines Schrittmotors mehrfach kleine Teilmengen der dosierten Probenflüssigkeit auf die Sorptions-Trennschicht abgegeben werden.

FIG.1

1/3

0075867

# FIG. 2

# FIG.3

# EUROPÄISCHER RECHERCHENBERICHT

Europäisches
Patentamt

**0075867**
Nummer der Anmeldung

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | **EINSCHLÄGIGE DOKUMENTE** | | EP 82108805.1 |
| A | DE - A1 - 2 558 672 (DESAGA) -- | | G 01 N 31/08 |
| A | DE - A - 2 164 408 (MÜLLER et al.) -- | | |
| A | US - A - 4 161 508 (JÄNCHEN) & DE-A1-2 642 777 ---- | | |

**RECHERCHIERTE SACHGEBIETE (Int. Cl. 3)**

G 01 N 31/00

Der vorliegende Recherchenbericht wurde für alle Patentansprüche erstellt.

| Recherchenort | Abschlußdatum der Recherche | Prüfer |
|---|---|---|
| WIEN | 15-12-1982 | TENGLER |